# EUROPEAN PATENT APPLICATION

(11) **EP 1 655 933 A1**
(43) Date of publication of application: **10.05.2006**
(21) Application number: 05006095.3
(22) Date of filing: 21.03.2005
(51) Int. Cl.: H04M 1/73

(54) **Portable electronic device**

(30) Priority: 08.11.2004 JP 2004324355
(71) Applicant: KABUSHIKI KAISHA TOSHIBA, Tokyo 105-8001 (JP)
(72) Inventor: Kato, Masataka, Toshiba Corporation, Tokyo 105-8001 (JP)
(74) Representative: HOFFMANN EITLE

(57) **Abstract**

A display operation mediating means (32) is placed between an application executing means (30) for selectively executing a plurality of applications (AP1 to APn) and generating display control information for each application, and first and second display devices (3, 4). In this display operation mediating means (32), priorities are preset for a plurality of pieces of display control information expected to be generated when the plurality of applications are executed. When a plurality of pieces of display control information are generated by the application executing means (30), the supply of the plurality of pieces of generated display control information to the first and second display devices (3, 4) is mediated in accordance with the stored priorities.

## Description

The present invention relates to a portable electronic device such as a mobile-phone or a PDA (Personal Digital Assistants) and, more particularly, to a portable electronic device having a plurality of display devices.

Recently, many portable electronic devices have a plurality of display devices. For example, Jpn. Pat. Appln. KOKAI Publication No. 6-37697 discloses a cellphone having a main display and sub display. This cellphone is a folding type cellphone obtained by pivotally connecting first and second housings via a hinge. The main display is formed on the front surface of the first housing, and the sub display is formed on the back surface of the first housing. The main display displays transmission/reception data, telephone directory data, and various pieces of control information indicating the operating state of the cellphone. The sub display displays control information to be given to a user in a standby state. Note that an LCD (Liquid Crystal Display) is generally used as each display.

This type of a cellphone includes a plurality of application programs in order to realize various functions such as an outgoing call and incoming call function, conversation function, browser function, and camera function. These application programs are executed in parallel regardless of whether each program is a foreground or background. When a plurality of application programs execute display control of the main display and sub display in parallel, the display contents of the main display and sub display may change regardless of the user's intention.

Also, a user usually does not use the main display and sub display of a cellphone at the same time. However, if a plurality of application programs are executed in parallel as described above, both the main display and sub display are simultaneously driven depending on the contents of the processing. This state is very unpreferable because the battery power is wastefully consumed to shorten the battery life.

It is an object of the present invention to provide a portable electronic device which prevents irrational display operations on a plurality of display devices even when a plurality of types of application programs are executed in parallel.

To achieve the above object, an aspect of the present invention is a portable electronic device comprising a first display device, a second display device formed independently of the first display device, and application executing means for selectively executing a plurality of applications and generating display control information for each application, wherein display operation mediating means is placed between the application executing means and the first and second display devices. In this display operation mediating means, priorities are preset for a plurality of display control information expected to be generated when the plurality of applications are executed. When a plurality of display control information are generated by the application executing means, the supply of the plurality of pieces of generated display control information to the first and second display devices is mediated in accordance with the stored priorities.

This summary of the invention does not necessarily describe all necessary features so that the invention may also be a sub-combination of these described features.

The invention can be more fully understood from the following detailed description when taken in conjunction with the accompanying drawings, in which:
FIGS. 1A and 1B are perspective views showing the outer appearance of a cellphone as an embodiment of a portable electronic device according to the present invention;
FIG. 2 is a block diagram showing the circuit configuration of the cellphone shown in FIGS. 1A and 1B;
FIG. 3 is a view showing the hierarchical structure of constituent elements which perform LCD display in the cellphone shown in FIG. 2;
FIG. 4 is a view showing an example of a priority table installed in the cellphone shown in FIG. 2;
FIG. 5 is a flowchart showing the sequence and contents of LCD display mediation executed by an ANN in the cellphone shown in FIG. 2; and
FIG. 6 is a view showing the state transition of management information of the ANN and the state transition of physical devices in the cellphone shown in FIG. 2.

First, an outline of an embodiment of the present invention will be explained below.

To achieve the above object, in an embodiment of the present invention, a display operation mediating means is placed between an application executing means and first and second display devices. In this display operation mediating means, priorities are preset for a plurality of display control information expected to be generated when a plurality of applications are executed. When a plurality of display control information are generated by the application executing means, the display operation mediating means mediates the supply of these pieces of generated display control information to the first and second display devices in accordance with the stored priorities.

Accordingly, even when a plurality of types of application programs are executed in parallel and thereby a plurality of different pieces of display control information are generated, these pieces of display control information are selectively supplied to a display device to be controlled in accordance with the preset priorities. Therefore, in a cellphone, for example, it is possible to prevent irrational display switching neglecting the user's intention, in which while information data acquired from a Web page is displayed on the main display, displays to be driven are suddenly switched, and control information of the cellphone or the like is displayed on the sub display. It is also possible to prevent the inconvenience that information is displayed on both the main display and sub display at the same time. This makes it possible to reduce wasteful power consumption and extend the battery life.

In addition, the display operation mediating means collectively mediates the supply of a plurality of pieces of display control information to the first and second display devices. This obviates the need to provide a mediating function to each application program, so general-purpose application programs can be directly installed.

The display operation mediating means can have the following various arrangements.

In the first arrangement, if a plurality of display control information are generated by the application executing means, display control information having the highest priority is selected from these display control information, and supplied to one of the first and second display devices which is to be controlled.

In this arrangement, display control information having the highest priority is always selected. Accordingly, this application program having the highest priority can always display data stably without being interrupted by other application programs.

In the second arrangement, if the plurality of display control information are generated by the application executing means, display control information having the highest priority is selected from these display control information, and supplied to one of the first and second display devices which is to be controlled. The other display control information than the selected display control information is held. After the display process by the selected display control information is terminated, the held display control information is supplied to one of the first and second display devices which is to be controlled.

In this arrangement, unselected display control information having low priority is not discarded but held, and supplied to a display device after the display operation by display control information having high priority is terminated. Therefore, an application program need not generate display control information again. Since this obviates the need to change any application program, general-purpose application programs can be directly installed and used.

In the third arrangement, when each of the first and second display devices includes a liquid crystal display panel and a backlight for illuminating this liquid crystal display panel, and display control information is supplied to one of these liquid crystal display panels, ON/OFF of the backlight corresponding to this liquid crystal display panel is controlled by interlocking with the information supply operation.

In this arrangement, even when a plurality of application programs independently control lighting of the backlights, ON/OFF of these backlights is controlled by interlocking with the display operations of the liquid crystal display panels. Therefore, the operations of the liquid crystal display panels and the operations of the backlights can always be synchronized with each other. Consequently, it is possible to realize a stable high-quality display operation, and reduce the power consumption by eliminating wasteful lighting of the backlights.

Embodiments according to the present invention will be described in detail below with reference to the accompanying drawing.

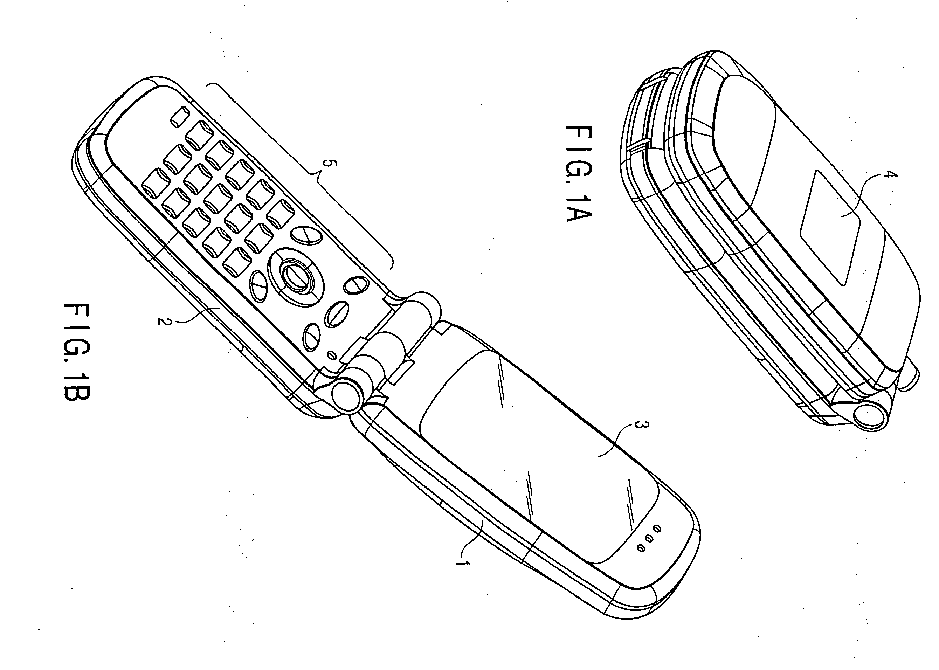

FIGS. 1A and 1B are perspective views showing the outer appearance of a cellphone as an embodiment of a cellphone according to the present invention. This cellphone is a so-called folding type portable communication terminal obtained by pivotally connecting an upper housing 1 and lower housing 2 via a hinge mechanism 6. FIG. 1A shows a state in which the housings 1 and 2 are folded. FIG. 1B shows a state in which the housings 1 and 2 are open.

A main LCD (Liquid Crystal Display) 3 is formed on the front surface of the upper housing 1. A sub LCD (Liquid Crystal Display) 4 is formed on the back surface of the upper housing 1. In each of the LCDs 3 and 4, a backlight is placed on the rear surface side of a liquid crystal display panel. The lower housing 2 has a key input device 5, and houses a main printed circuit board (not shown). The key input device 5 includes function keys, such as a transmission key, end key, power key, volume control key, and mode designating key, in addition to dial keys. It is also possible to assign a plurality of functions to one function key, and select a function to be executed in accordance with the state of the cellphone.

A main control unit 30, main LCD driver 24, and sub LCD driver 25 (each of which will be described later) are mounted on the main printed wiring board. This main printed wiring board and the LCDs 3 and 4 are connected by a signal line cable (not shown). The signal line cable is obtained by forming a plurality of signal line patterns on a flexible substrate, and attaching connectors to the two ends of the cable. The signal line cable runs inside the hinge 6.

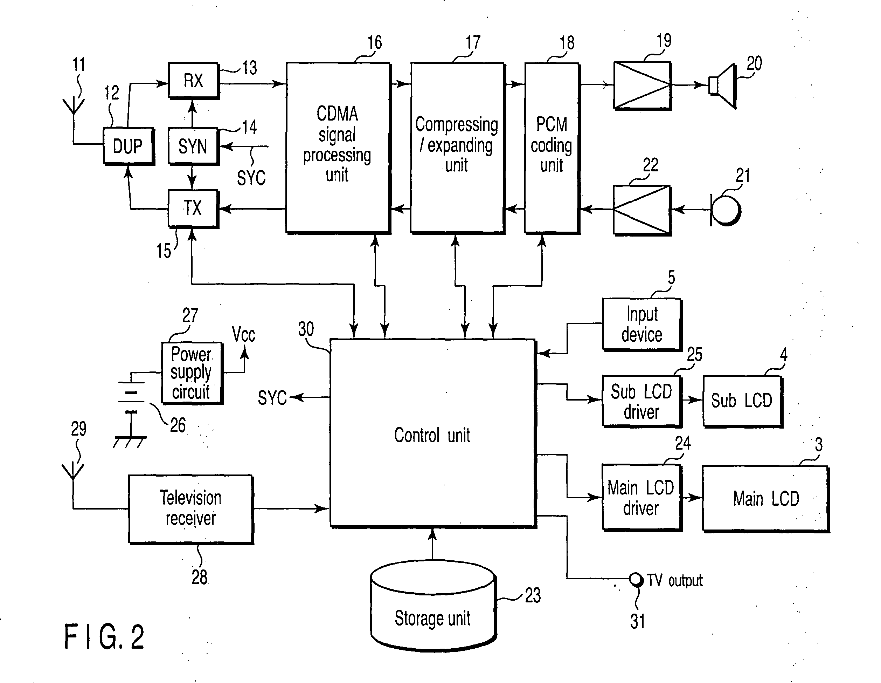

The circuit of the cellphone is configured as follows. FIG. 2 is a block diagram showing the configuration. That is, a radio signal transmitted from a base station (not shown) is received by an antenna 11, and input to a receiving circuit (RX) 13 via a duplexer (DUP) 12. The receiving circuit 13 mixes the received radio signal with a local oscillation signal output from a frequency synthesizer (SYN) 14, thereby down-converting the signal into an intermediate-frequency signal. The receiving circuit 13 processes this intermediate-frequency signal by quadrature demodulation, and outputs a reception baseband signal. Note that the frequency of the local oscillation signal generated by the frequency synthesizer 14 is designated by a control signal SYC output from the control unit 30.

The reception baseband signal is input to a CDMA signal processing unit 16. The CDMA signal processing unit 16 includes a RAKE receiver. The RAKE receiver despreads a plurality of passes included in the reception baseband signal by using spread codes. The signals of these despread passes are synthesized after their phases are mediated. As a consequence, reception packet data is obtained. This reception packet data is input to a compressing/expanding) unit (to be referred to as a compander hereinafter) 17.

The compander 17 has a multiplexer/demultiplexer. This multiplexer/demultiplexer demultiplexes the output reception packet data from the CDMA signal processing unit 16 into media data. The compander 17 individually decodes these demultiplexed media data. For example, if audio data is contained in the reception packet data, this audio data is decoded by a speech codec. Also, if video data is contained in the reception packet data, this video data is decoded by a video codec. A digital audio signal obtained by the decoding process is input to a PCM (Pulse Code Modulation) coding unit (to be referred to as a PCM codec hereinafter) 18, and a digital video signal obtained by the decoding process is input the control unit 30. In addition, if text data such as mail or an application program is contained in the reception packet data, this text data is input to the control unit 30.

The PCM codec 18 decodes the digital audio signal output from the compander 17, and outputs an analog audio signal. This analog audio signal is amplified by an amplifier 19, and output from a loudspeaker 20.

The control unit 30 displays the digital video signal output from the compander 17 on the main LCD 3 via a video RAM. Note that the control unit 30 displays not only received video data but also video data of an image captured by a camera (not shown) on the main LCD 3 via the video RAM. The text data such as mail or an application program is stored in a storage unit 23. The stored text data is read out from the storage unit 23 and displayed on the main LCD 3 in accordance with a display operation performed by the user by using the input device 5. On the other hand, the sub LCD 4 displays information indicating the operation mode of the mobile-phone, incoming call notification information, and the residual amount or charged state of a battery 26.

A speech signal of a speaker input to a microphone 21 is amplified to an appropriate level by an amplifier 22, coded into a digital audio signal by the PCM codec 18, and input to the compander 17. Also, an output video signal from the camera (not shown) is converted into a digital signal by the control unit 30, and input to the compander 17. Note that text data such as mail formed by the control unit 30 is also input from the control unit 30 to the compander 17.

The compander 17 detects the energy amount of the input speech from the digital audio signal output from the PCM codec 18, and determines a transmission data rate on the basis of the detection result. Then, the compander 17 codes the digital audio signal into a signal having a format corresponding to the transmission data rate, thereby generating audio data. Also, the compander 17 codes the digital video signal output from the control unit 30, and generates video data. The multiplexer/demultiplexer packetizes these speech data and image data in accordance with a predetermined transmission format, and outputs this transmission packet data to the CDMA signal processing unit 16. Note that when text data such as mail is output from the control unit 30, this text data is also multiplexed in the transmission packet data.

The CDMA signal processing unit 16 spreads the spectrum of the output transmission packet data from the compander 17 by using a spread code allocated to a transmission channel, and outputs this transmission signal having the spread spectrum to a transmission circuit (TX) 15. The transmission circuit 15 modulates the transmission signal having the spread spectrum by using a digital modulation scheme such as QPSK (Quadrature Phase Shift Keying). The transmission circuit 15 synthesizes this modulated transmission signal with the local oscillation signal generated from the frequency synthesizer 4, thereby up-converting the signal into a radio signal. Then, the transmission circuit 15 amplifies the radio signal to a high frequency so that the transmission power level designated by the control unit 30 is obtained. The amplified radio signal is supplied to the antenna 11 via the duplexer 12, and transmitted from the antenna 11 to the base station.

A power supply circuit 27 generates, from an output from the battery 26, a power supply voltage Vcc necessary for the cellphone to operate, and supplies this voltage to the individual circuits. Note that the battery 26 is charged by a charging circuit (not shown).

The cellphone according to this embodiment also includes a television receiver 28. The television receiver 28 receives a ground broadcasting wave or satellite broadcasting wave by an antenna 29, and demodulates and reconstructs a television signal from the received broadcasting wave. This demodulated reconstructed television signal is displayed on the main LCD 3 under the control of the control unit 30, or output from a television output interface (TV output interface) of the control unit 30 to a television output terminal (TV output terminal) 31. An external monitor (not shown) is connected to the TV output terminal 31, and the television signal is displayed on this external monitor.

The control unit 30 includes a microprocessor. The control unit 30 realizes various functions of the cellphone by allowing this microprocessor to execute a plurality of application programs (to be abbreviated as applications hereinafter) prepared beforehand. Examples of the prepared applications are as follows.

(1) An application for performing incoming call/outgoing call control and conversation control, and an application for transmitting and receiving mail. (2) An application for downloading information data from an Web site. (3) An application for controlling image sensing by the camera, and displaying and storing image sensing data. (4) An application for outputting, from the TV output terminal 31, a television signal demodulated and reconstructed by the television receiver 28. (5) An application for outputting, from the TV output terminal 31, display data of a game displayed on the main LCD 3 or finder display data of the camera.

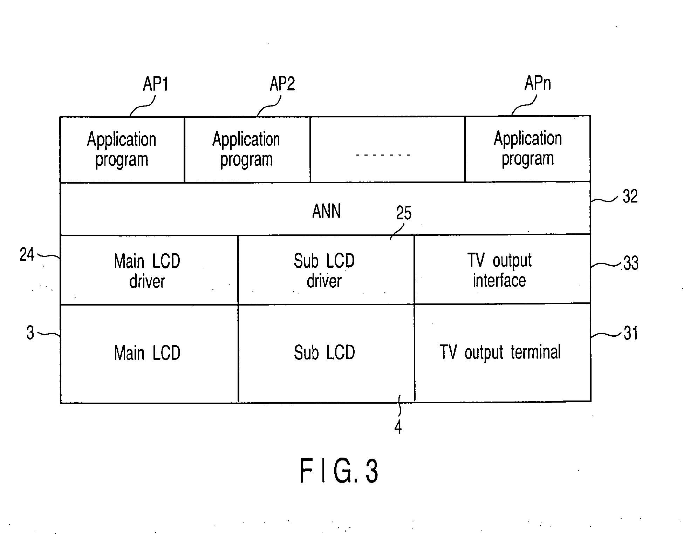

The cellphone of this embodiment includes the following components as hardware and software for LCD display and TV output. FIG. 3 is a view showing the hierarchical structure of these components. That is, the main LCD 3, sub LCD 4, and TV output terminal 31 are arranged in a physical layer. The main LCD driver 24 and sub LCD driver 25 are arranged in an interface layer for driving the main LCD 3, sub LCD 4, and TV output terminal 31. A TV output interface 33 corresponding to the TV output terminal 31 is also placed in this interface layer. Note that although the main LCD driver 24 and sub LCD driver 25 can be formed outside the control unit 30 as hardware as shown in FIG. 2, they may also be formed inside the control unit 30 as software.

A plurality of applications AP1 to APn for controlling LCD display are arranged in an application layer. Middleware is placed between the layer of the main LCD driver 24 and sub LCD driver 25 and the layer of the applications AP1 to APn. This middleware is called an annunciator library (to be referred to as an ANN hereinafter) 32. The ANN 32 has a function of mediating operations of outputting display data to the main LCD 3, sub LCD 4, and TV output terminal 31 in accordance with a priority table prepared beforehand, between the applications AP1 to APn, LCD drivers 24 and 25, and TV output interface 33. Note that the ANN 32 is implemented by executing a program by the microprocessor in the control unit 30 in the same manner as the applications AP1 to APn.

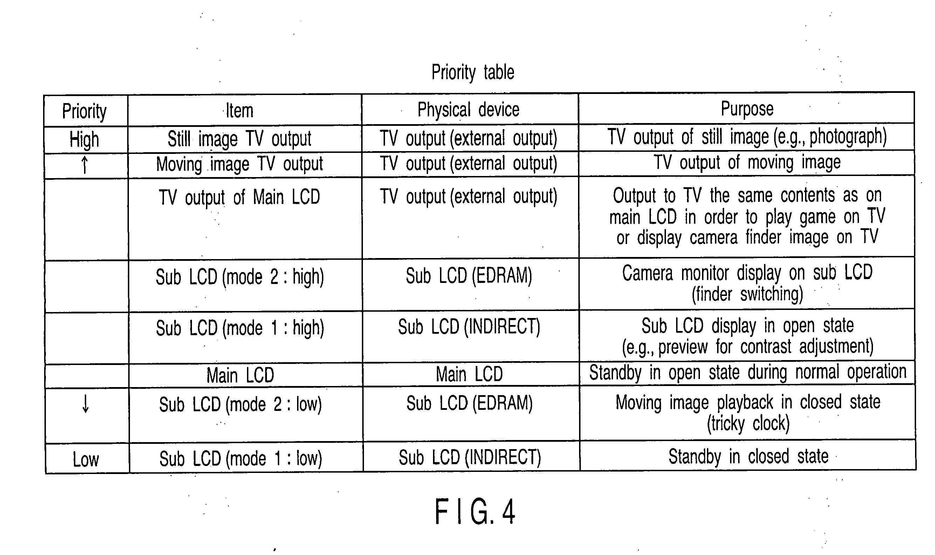

The priority table stores priorities in one-to-one correspondence with display requests generated when the applications AP1 to APn are executed. FIG. 4 shows an example of this priority table. In this example, the highest priority is set for "still image TV output", and the priority lowers in the order of "motion image TV output", "main LCD TV output", "sub LCD (mode 2: high)", "sub LCD (mode 1: high)", "main LCD", "sub LCD (mode 2: low)", and "sub LCD (mode 1: low)".

"Still image TV output" is a display request generated when, e.g., still image data captured by the camera (not shown) is to be output from the TV output terminal 31 to an external monitor. "Moving image TV output" is a display request generated when, e.g., moving image data received by the television receiver 28 or moving image data stored in the storage unit 23 is to be output from the TV output terminal 31 to an external monitor. "Main LCD TV output" is a display request generated when the same display data as display data of a game displayed on the main LCD 3 or as display data of the camera finder is to be output from the TV output terminal 31 to an external monitor.

As a display method for the sub LCD 4, two display methods using an LCDC (LCD Controller) and not using it are selectively used. The method using the LCDC displays data by using the internal VRAM (Video RAM) of the control unit, and can display motion image data reconstructed from the storage unit. The method not using the LCDC displays data by using a control LSI formed in the sub LCD driver 25. Although this method cannot display motion image data and the like, the power consumption can be reduced.

"Sub LCD (mode 2: high)" is a display request which designates the method using the LCDC as a display method. This display request is generated when, e.g., image data displayed on the camera finder is to be displayed on the sub LCD 4. "Sub LCD (mode 1: high)" is a display request which designates the method not using the LCDC as a display method. This display request is generated when, e.g., preview data for contrast adjustment or the like is to be displayed while the upper housing 1 and lower housing 2 are open.

"Main LCD" is a display request generated when display data is to be displayed on the main LCD 3. This display request is generated when, e.g., mail is to be formed, Web information is to be browsed, or a standby image is to be displayed while the upper housing 1 and lower housing 2 are open. "Sub LCD (method 2: low)" is a display request generated when, e.g., motion image data of a clock is to be displayed while the upper housing 1 and lower housing 2 are closed. "Sub LCD (method 1: low)" is a display request generated when the standby image is to be displayed while the upper housing 1 and lower housing 2 are closed.

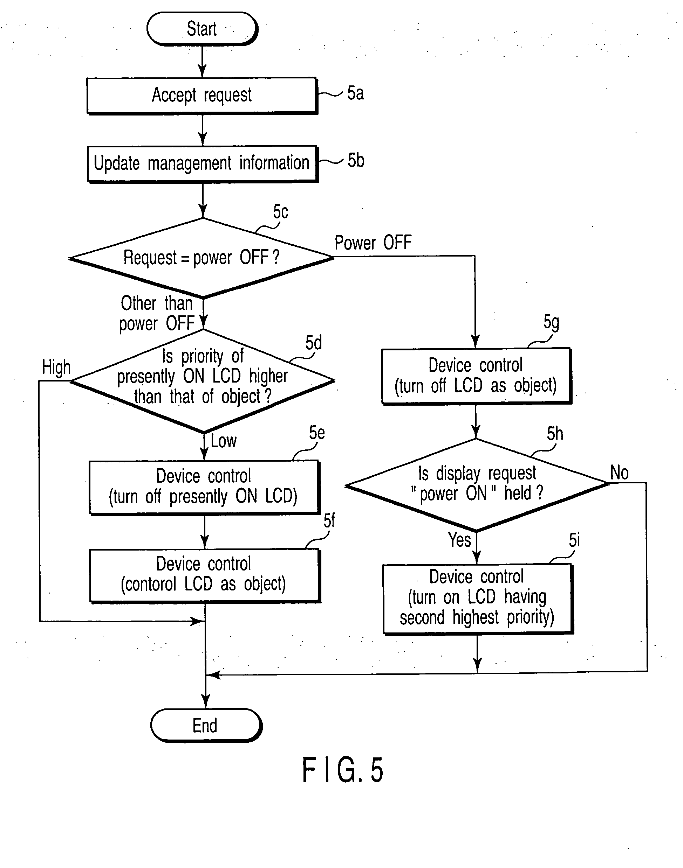

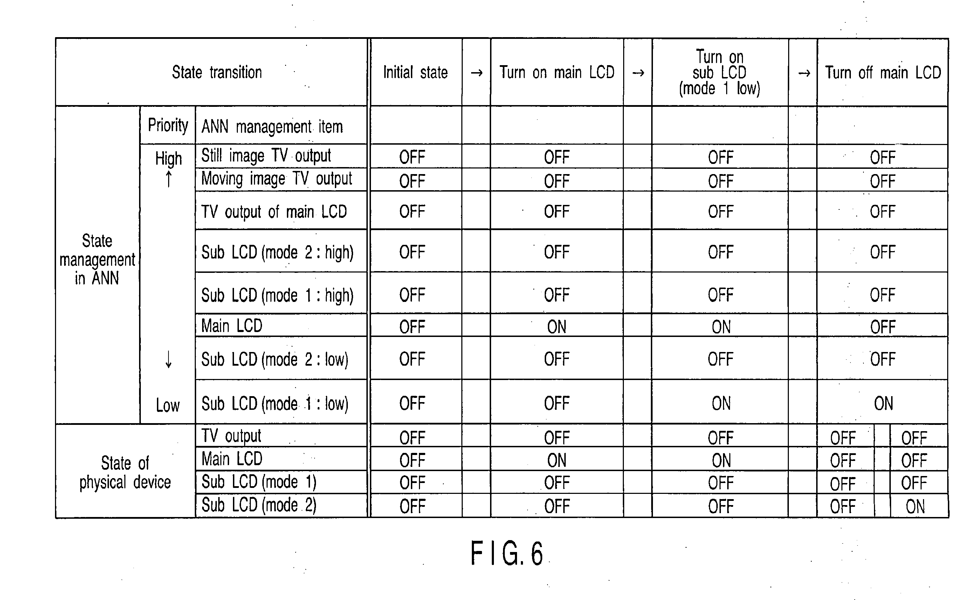

The LCD display operation of the cellphone having the above arrangement will be explained below. FIG. 5 is a flowchart showing the sequence and contents of LCD display mediation performed by the ANN 32. FIG. 6 is a view showing the state transition of management information of the ANN 32 and the state transition of physical devices.

When an application is executed by the control unit 30 and a display request is generated, the ANN 32 accepts this display request in step 5a, and updates management information in step 5b. For example, when the user opens the housings 1 and 2 in the standby state, the control unit 30 executes an application and generates a display request "main LCD". When this display request "main LCD" is generated, the ANN 32 changes the management information such that the power supply of the main LCD 3 is turned on from the initial state.

Note that although FIG. 6 shows only the power supply states (ON/OFF) as the contents of the management information, the management information also includes LCD identifiers indicating objects to be controlled, priorities, power supply states (ON/OFF), and optional information. Examples of the optional information are a change of the display direction (0°/180°) of display data in an LCD, and the presence/ absence of setting of a partial mode (power-saving mode).

Subsequently, in step 5c, the ANN 32 analyzes the contents of the generated display request to check whether this display request is a request for power OFF of an LCD or another request. The other request includes a power ON request and a display direction change request.

If it is determined by the above display request determination that the display request is a request for power ON of the LCD 3, the ANN 32 advances to step 5d, and checks whether an LCD currently being ON is present. If no ON LCD is present, the ANN 32 advances to step 5f through step 5e, and turns on the power supply of the main LCD 3 as a physical device to be controlled. Note that the ANN 32 also turns on the power supply of the backlight of the main LCD 3 by interlocking with the power "ON" operation of the main LCD 3.

Assume that in this state, another application is executed by the control unit 30, and a display request "sub LCD (method 1: low)" is newly generated. In this case, in step 5b, the ANN 32 updates the management information as shown in FIG. 6. Since the newly generated display request is a request for power ON of an LCD, the ANN 32 advances from step 5c to step 5d to check whether an LCD which is already ON is present. Since the main LCD 3 which is already ON is present, the ANN 30 looks up the priority table, and checks whether the display request "main LCD" has priority higher than that of the newly generated display request "sub LCD (method 1: low)". Since the priority order of the display request "main LCD" is higher than that of the newly generated display request "sub LCD (method 1: low)", the ANN 32 maintains the present state without controlling any physical devices.

Accordingly, even when a display request for turning on the power supply of the sub LCD 4 is generated by executing an application while the user is watching the main LCD 3, the inconvenience that the main LCD 3 is suddenly turned off can be prevented. Note that the newly generated display request "sub LCD (method 1: low)" is directly held in the management information.

Assume that, for example, the user closes the housings 1 and 2 in this state. In this case, an application generates a request for turning off the display operation of the main LCD 3, and the ANN 32 updates the management information as shown in FIG. 6 in step 5b. In addition, since it is determined in step 5c that this request indicates power OFF, the ANN 32 advances to step 5g to turn off the power supply of the main LCD 3 as shown in FIG. 6. Note that the ANN 32 also turns off the power supply of the backlight of the main LCD 3 by interlocking with power OFF of the main LCD 3.

Subsequently, in step 5h, the ANN 32 refers to the management information to check whether a display request "power ON" is held. If no display request "power ON" is held, the ANN 32 immediately terminates the process. If a display request "power ON" is held, the ANN 32 advances to step 5i, and turns on the power supply of the corresponding LCD in accordance with the contents of the held display request. For example, if the display request "sub LCD (method 1: low)" is held in the management information as described above, the ANN 32 turns on the power supply of the sub LCD 4 in accordance with the contents of this display request. Note that the ANN 32 also turns on the power supply of the backlight of the sub LCD 4 by interlocking with power ON of the sub LCD 4.

In this manner, the display request "sub LCD (method 1: low)" having low priority is automatically read out from the management information and processed after the display operation of the main LCD 3 having priority higher than that of this request is terminated. Therefore, the application need not generate the display request "sub LCD (method 1: low)" again.

Assume that a display request having priority higher than that of "main LCD" is newly generated while the power supply of the main LCD 3 is ON. In this case, the ANN 32 advances from step 5d to step 5e to turn off the power supply of an LCD whose display is presently ON, and then advances to step 5f to turn on the power supply of the corresponding LCD in accordance with the contents of the newly generated display request. For example, when a display request "sub LCD (method 2: high)" is generated while the power supply of the main LCD 3 is ON, the ANN 32 turns off the power supply of the main LCD 3 and turns on the power supply of the sub LCD 4. Note that the ANN 32 turns off the power supply of the backlight of the main LCD 3 by interlocking with the power OFF operation of the main LCD 3, and turns on the power supply of the backlight of the sub LCD 4 by interlocking with the power ON operation of the sub LCD 4.

The "main LCD" power ON request held in the management information returns to power OFF when a power OFF request is generated from the requesting application.

Assume that a request, e.g., "still image TV output" or "motion image TV output", having priority higher than that of "sub LCD (method 2: high)" is newly generated while the power supply of the sub LCD 4 is ON. In this case, in step 5e, the ANN 32 turns off the power supply of the sub LCD 4 whose display is presently ON. Note that the ANN 32 turns off the backlight of the sub LCD 4 by interlocking wit the power OFF operation of the sub LCD 4. The ANN 32 then advances to step 5f to operate the TV output interface 33 in accordance with the contents of the newly generated request. Accordingly, while the still image TV output application or the motion image TV output application is executed, still image display data or motion image display data is output from the TV output terminal 31 to an external monitor (not shown) and displayed on it.

That is, in a period during which still image display data or motion image display data is output from the TV output terminal 31, any display operation which is performed for the main LCD 3 or sub LCD 4 and has lower priority is not executed. This prevents wasteful power consumption in the main LCD 3 and sub LCD 4, and makes it possible to extend the battery life.

Note that even in this case, the "sub LCD" power ON request held in the management information returns to power OFF when a power OFF request is generated from the requesting application.

In this embodiment as described above, the ANN 32 is placed between the applications AP1 to APn and the LCD drivers 24 and 25 and TV output interface 33. The ANN 32 determines, on the basis of the priority table, the priorities of requests generated when the applications AP1 to APn are executed. On the basis of this determination result, the ANN 32 selectively turns on or off the LCDs 3 and 4, or outputs TV display data from the TV output terminal 31 while both the LCDs 3 and 4 are kept OFF, in accordance with the contents of a request having higher priority.

Accordingly, even when the plurality of types of applications AP1 to APn are executed in parallel and a plurality of different requests are generated, the LCDs 3 and 4 are selectively turned on, or TV display data is output from the TV output terminal 31 while both the LCDs 3 and 4 are kept OFF, in accordance with the contents of a request having high priority. This prevents irrational display switching, which neglects the user's intention, on the LCDs 3 and 4. It is also possible to prevent the inconvenience that information is simultaneously displayed on both the LCDs 3 and 4, or information is displayed on the LCD 3 or 4 while TV display data is output from the TV output terminal 31. This makes it possible to reduce wasteful power consumption, and extend the life of the battery 26.

In addition, the ANN 32 collectively mediates the supply of requests to the main LCD 24, sub LCD 25, and TV output interface 33. This obviates the need to provide a mediating function to each of the applications AP1 to APn, so any general-purpose applications can be directly installed.

Furthermore, ON/OFF of the backlights is controlled by interlocking with the operation of supplying display requests to the main and sub LCDs 3 and 4. Accordingly, even when a plurality of applications independently control lighting of these backlights, each backlight is turned on or off by interlocking with the display operation of the liquid crystal display panel. This makes it possible to always synchronize the display operation of the liquid crystal display panel with the lighting operation of the backlight in each of the LCDs 3 and 4. As a consequence, a stable high-quality display operation can be realized. Additionally, the power consumption can be further reduced by eliminating wasteful backlight lighting.

Note that the present invention is not limited to the above embodiment. For example, the above embodiment is explained by taking a cellphone as an example. However, the present invention is similarly applicable to a PDA, game machine, digital camera, and portable audio/video player. In short, the present invention can be applied to any portable electronic device which selectively controls a plurality of display devices. Also, the number and arrangements of display devices, the number and functions of applications, the sequence and contents of display mediating control by the ANN, the contents of the priority table, and the like can be variously modified when practiced without departing from the spirit and scope of the invention.

In conclusion, the present invention is not directly limited to the above embodiment, but can be implemented, when practiced, by modifying the constituent elements without departing from the spirit and scope of the invention. Also, various inventions can be formed by appropriately combining a plurality of constituent elements disclosed in the embodiment. For example, some of all the constituent elements disclosed in the embodiment may be deleted. Furthermore, constituent elements over different embodiments may be appropriately combined.

## Claims

1. A portable electronic device **characterized by** comprising:
a first display device (3);
a second display device (4) formed independently of the first display device (3);
application executing means (30) for selectively executing a plurality of application programs (AP1 to APn), and generating display control information for each executed application program; and
display operation mediating means (32) placed between the application executing means (30) and the first and second display devices (3, 4),
wherein the display operation mediating means (32) comprises:
means (23) for storing preset priorities, assigned to a plurality of display control information, used for mediating ; and
means (30) for, when the plurality of display control information are generated by the application executing means (30), mediating supply of the plurality of generated display control information to the first and second display devices (3, 4) in accordance with the stored priorities.

2. The portable electronic device according to claim 1, **characterized in that** when the plurality of display control information are generated by the application executing means (30), the means (30) for mediating supply of display control information selects display control information having the highest priority from the plurality of display control information, and supplies the selected display control information to one of the first and second display devices (3, 4) which is to be controlled.

3. The portable electronic device according to claim 1, **characterized in that** the means (30) for mediating supply of display control information comprises:
means (30) for, when a plurality of display control information are generated by the application executing means (30), selecting display control information having the highest priority from the plurality of display control information, and supplying the selected display control information to one of the first and second display devices (3, 4) which is to be controlled; and
means for holding display control information other than the selected display control information, and, after a display process by the selected display control information is terminated, supplying the held display control information to one of the first and second display devices (3, 4) which is to be controlled.

4. The portable electronic device according to claim 1, **characterized in that**
when each of the first and second display devices (3, 4) comprises a liquid crystal display panel and a backlight which illuminates the liquid crystal display panel,
the means (30) for mediating supply of display control information supplies display control information to a liquid crystal display panel to be controlled, and controls ON/OFF of the backlight corresponding to the liquid crystal display panel to be controlled by interlocking with the operation of supplying the display control information.

5. A portable electronic device **characterized by** comprising:
a first display device (3);
a second display device (4) formed independently of the first display device (3); and
a control unit (30) connected to the first and second display devices (3, 4),
wherein the control unit (30) comprises:
first and second display drivers (3, 4) which operate the first and second display devices (3, 4), respectively;
application executing means (30) for selectively executing a plurality of application programs (AP1 to APn), and generating display control information for each executed application program (AP1 to APn); and
display operation mediating means (30) logically placed between the application executing means (30) and the first and second display drivers (3, 4), and
the display operation mediating means (30) includes:
means for storing preset priorities, assigned to a plurality of display control information, used for mediating; and
means (30) for, when the plurality of display control information are generated by the plurality of application executing means (30), mediating supply of the plurality of generated display control information to the first and second display drivers (3, 4) in accordance with the stored priorities.

6. The portable electronic device according to claim 5, **characterized in that** when the plurality of display control information are generated by the application executing means (30), the means (30) for mediating supply of display control information selects display control information having the highest priority from the plurality of display control information, and supplies the selected display control information to one of the first and second display drivers (3, 4) which is to be controlled.

7. The portable electronic device according to claim 5, **characterized in that** the means (30) for mediating supply of display control information comprises:
means for, when the plurality of display control information are generated by the application executing means (30), selecting display control information having the highest priority from the plurality of display control information;
means (30) for supplying the selected display control information to one of the first and second display drivers (3, 4) which is to be controlled;
means (30) for holding display control information other than the selected display control information; and
means (30) for, after a display process by the selected display control information is terminated, supplying the held display control information to one of the first and second display drivers (3, 4) which is to be controlled.

8. The portable electronic device according to claim 5, **characterized in that**
when each of the first and second display devices (3, 4) comprises a liquid crystal display panel and a backlight which illuminates the liquid crystal display panel,
the means (30) for mediating supply of display control information controls ON/OFF of the backlight by interlocking with a display control operation, which is based on the display control information, of the liquid crystal display panel.
